# EUROPÄISCHE PATENTANMELDUNG

(11) **EP 4 047 697 A2**
(43) Veröffentlichungstag der Anmeldung: **24.08.2022**
(21) Anmeldenummer: 22155309.2
(22) Anmeldetag: 07.02.2022
(51) Int. Cl.: H01M 8/04119, H01M 8/04223

(54) **ABSCHEIDER**

(30) Priorität: 23.02.2021 DE 102021104298
(71) Anmelder: SVM Schultz Verwaltungs-GmbH & Co. KG, 87700 Memmingen (DE)
(72) Erfinder: Baumgartl, Peter, 87746 Erkheim (DE)
(74) Vertreter: Patentanwälte Olbricht, Buchhold, Keulertz Partnerschaft mbB

(57) **Zusammenfassung**

Vorgeschlagen wird ein Abscheider, insbesondere Wasserabscheider, umfassend ein Gehäuse (4) mit einem Einlass (6), ausgebildet zum Einleiten eines Fluidstroms (14) in das Gehäuse (4), einem ersten Auslass (8), ausgebildet zum Ausleiten des Fluidstroms (14) aus dem Gehäuse (4), und einem zweiten Auslass (10), ausgebildet zum Ausleiten von aus dem Fluidstrom (14) abgeschiedenen Abscheidungen aus dem Gehäuse (4), wobei innerhalb des Gehäuses (4) ein Wärmeleitelement (12) derart angeordnet ist, dass es einends im oder benachbart zum Fluidstrom (14) angeordnet und anderenends am zweiten Auslass (10) angeordnet ist und/oder, dass eine Gasleitung (38) im oder am Gehäuse (4) vorhanden ist, welche fluidisch mit dem zweiten Auslass (10) verbunden ist, um ein erwärmtes Gas dorthin zu leiten.

## Beschreibung

Die Erfindung betrifft einen Abscheider gemäß dem Oberbegriff von Anspruch 1, sowie eine Baugruppe nach Anspruch 9 und eine Verwendung nach Anspruch 10.

Aus der Praxis sind Abscheider und insbesondere Wasserabscheider bekannt, die ein Gehäuse umfassen. Diese Abscheider können beispielsweise mit einer Brennstoffzelle gekoppelt werden und/oder in einem Brennstoffzellenfahrzeug verwendet werden. Das Gehäuse weist einen Einlass auf, über welchen ein Fluidstrom in das Gehäuse eingeleitet werden kann. Über einen Auslass im Gehäuse wird der Fluidstrom nach dem Abscheiden im Gehäuse wieder aus dem Gehäuse ausgeleitet. Zudem ist ein weiterer Auslass vorhanden zum Ausleiten von aus dem Fluidstrom abgeschiedenen Abscheidungen aus dem Gehäuse. Abscheidungen können beispielsweise Wasser und/oder ein Gas sein, beispielsweise Stickstoff.

Problematisch ist jedoch Wasser, welches sich im Gehäuse nach Betriebsabschaltung ansammelt. Das Wasser entsteht dadurch, dass nach dem Abschalten weiterer Wasserdampf im Gehäuse kondensiert und sich im Bereich des weiteren Auslasses oder Flüssigkeitsauslasses sammelt. Bei Umgebungstemperaturen unterhalb des Gefrierpunktes kommt es dazu, dass dieses Wasser gefriert und den weiteren Auslass verschließt oder sogar ein entsprechendes Ventil einfrieren kann. Das führt somit dazu, dass bei einem erneuten Starten keine Abscheidung und kein Wasser abgelassen werden kann bis zum Auftauen des Eises oder des Ventils. Insbesondere führt das ansteigende Wasser, das aufgrund der Vereisung noch nicht ausgelassen werden kann, dazu, dass das Gehäuse vollläuft und sogar überlaufen kann. Das Wasser kann in den Rezirkulationskreislauf gesaugt oder gespült werden. Um dies zu verhindern und einen kritischen Wert zu überwachen, bedarf es üblicherweise einer Füllstandsensorik.

Bislang werden aktive Heizelemente verwendet, zumeist Widerstandsheizelemente, um das Eis aufzutauen. Dieser Ansatz verwendet jedoch erhebliche Zusatzenergie, führt zu einer größeren Menge an Bauteilen und reduziert die Effizienz der Brennstoffzelle, da bislang ein Teil der generierten elektrischen Energie für das Heizen und Auftauen verwendet wird.

Aufgabe der Erfindung ist es daher, einen Abscheider zu schaffen, welcher nach dem Starten schnellstmöglich ein Abführen von Abscheidungen, insbesondere von flüssigen Abscheidungen, aus seinem Gehäuse ermöglicht und dabei die Probleme des Standes der Technik überwindet.

Hauptmerkmale der Erfindung sind im kennzeichnenden Teil von Anspruch 1 angegeben und in Anspruch 9 und 10 definiert. Ausgestaltungen sind Gegenstand der Ansprüche 2 bis 8.

Erfindungsgemäß wird daher ein Abscheider vorgeschlagen, insbesondere Wasserabscheider, umfassend ein Gehäuse mit einem Einlass, ausgebildet zum Einleiten eines Fluidstroms in das Gehäuse, einem ersten Auslass, ausgebildet zum Ausleiten des Fluidstroms aus dem Gehäuse, und einem zweiten Auslass, ausgebildet zum Ausleiten von aus dem Fluidstrom abgeschiedenen Abscheidungen aus dem Gehäuse, wobei innerhalb des Gehäuses ein Wärmeleitelement derart angeordnet ist, dass es einends im oder benachbart zum Fluidstrom angeordnet und anderenends am zweiten Auslass angeordnet ist und/oder, dass eine Gasleitung im oder am Gehäuse vorhanden ist, welche fluidisch mit dem zweiten Auslass verbunden ist, um ein erwärmtes Gas dorthin zu leiten.

Erfindungsgemäß sind daher zwei Lösungen vorgeschlagen, welche sowohl jeweils separat als auch gemeinsam die benannten Probleme lösen. Beide Lösungen dienen dem schnellstmöglichen Auftauen des gefrorenen Wassers, um den weiteren oder zweiten Auslass frei zu machen.

Zum einen dient dazu das Wärmeleitelement. Das Wärmeleitelement kann ein zum Gehäuse separates Element sein und aus einem Material mit hoher Wärmeleitfähigkeit bestehen. Das Wärmeleitelement ist einends im oder benachbart zum Fluidstrom angeordnet. Der in das Gehäuse eingeleitete Fluidstrom führt thermische Energie. Zwar wirkt diese thermische Energie mittels Konvektion auf das gefrorene Wasser ein, jedoch lediglich an dessen Oberfläche, die mitunter weit entfernt vom zweiten Auslass liegen kann. Ohne Wärmeleitblech würde dann zunächst nur die wärmebeaufschlagte Oberfläche des gefrorenen Wassers geschmolzen werden, welches anschließend wie ein Isolator fungiert und somit das Schmelzen des restlichen Eises verlangsamt. Die thermische Energie des Fluidstroms kann jedoch aufgrund des erfindungsgemäßen Anordnens des Wärmeleitelements auch zur Erwärmung desselben führen. Mittels Wärmeleitung oder Konduktion kann das Wärmeleitelement die Wärme aus dem Fluidstrom unmittelbar und zielgerichtet zum zweiten Auslass führen. Dadurch wird ein Kanal entlang des Wärmeleitelements freigeschmolzen, durch welchen die Abscheidungen oder flüssigen Abscheidungen aus dem Gehäuse abgelassen werden können. Es ist daher bei Nutzung des Wärmeleitelements zur Verwirklichung einer schnellstmöglichen Abführmöglichkeit aus dem Gehäuse nicht erforderlich das komplette gefrorene Wasser bis hin zum zweiten Auslass zu schmelzen.

Für die Erwärmung des Wärmeleitelements kann "benachbart zum Fluidpfad" bedeuten, dass das Wärmeleitelement einends so zu einem den Fluidpfad umgebenden Fluidpfadbereich angeordnet ist, dass dessen thermische Energie mittelbar oder unmittelbar das Wärmeleitelement erwärmt. Der Fluidpfadbereich kann beispielsweise ellipsoid um den Fluidpfad herum sein mit geometrischen Brennpunkten im Bereich des Ein- und ersten Auslasses.

Zum anderen dient dazu die Gasleitung. Die Gasleitung kann ein zum Gehäuse separates oder integrales bzw. einstückiges Element sein. Die Gasleitung kann einen einzigen Einlass und einen einzigen Auslass umfassen und ein Gas führen. Die Gasleitung ist einends, vorzugsweise über ihren Einlass, mit einem Gasstrom beaufschlagbar. Dieser Gasstrom (beispielsweise Stickstoff) kann beispielsweise aus dem Fluidstrom ausgeschieden sein, der durch das Gehäuse geführt wird. Da der durch das Gehäuse geleitete Fluidstrom thermische Energie führt, ist diese thermische Energie ebenfalls im Gasstrom vorhanden. Dieser Gasstrom oder ein anderer thermische Energie führender Gasstrom ist nun in erfindungsgemäßer Weise zum zweiten Auslass führbar, um dort das gefrorene Wasser zu schmelzen.

Der Einlass im Gehäuse kann ein Einlass für einen Fluidstrom aus Rezirkulationsgas (Wasserstoffstickstoff-Wasser (Tröpfchen)-Gemisch) aus einer Brennstoffzelle sein. Der erste Auslass kann ein Auslass zur Rückführung des Rezirkulationsgases zur Brennstoffzelle sein, damit der nicht verwertete Wasserstoff wiederverwertet werden kann. Der zweite Auslass kann ein Flüssigkeitsauslass sein, um das angesammelte Wasser aus dem Gehäuse abzulassen. Der zweite Auslass kann, bezogen auf einen Montagezustand, im tiefstliegenden Bereich des Gehäuses angeordnet sein, um das Wasser dort mittels Schwerkraft zu sammeln und auszuleiten. Das Abscheiden im Gehäuse kann beispielsweise mittels Prallabscheidung erfolgen, wobei hier die Reduzierung der Strömungsgeschwindigkeit des Fluidstroms unter einen bestimmten Wert erfolgt.

Die Erfindung weist neben den oben beschriebenen Vorteilen den weiteren Vorteil auf, wonach eine Kostenreduzierung eines zugeordneten Brennstoffzellensystems erfolgen kann. Insbesondere können durch die Erfindung die Anzahl von benötigten Bauteilen reduziert werden, da sich der Abscheider selbst erwärmt. Es kann zudem auf Füllstandsensorik verzichtet werden, die bislang nötig war, um einen kritischen Füllstand im Gehäuse zu überwachen.

Gemäß einer denkbaren Weiterbildung des Abscheiders nach der Erfindung kann das Wärmeleitelement einen Wärmeleitkoeffizienten λ im Bereich von 40 W/(m*K) bis 400 W/(m*K) aufweisen. Als besonders vorteilhaftes Material des Wärmeleitelements hat sich beispielsweise eine Aluminiumlegierung erwiesen, da sie neben einer geeigneten Leitfähigkeit zudem leicht und einfach zu verarbeiten ist, jedoch auch Kupferlegierungen weisen diese Eigenschaften auf. Sobald das Wärmeleitelement eine Temperatur von über 0°C aufweist, ist ein schmaler Kanal in Richtung des zweiten Auslasses freigeschmolzen. Ab diesem Moment ist das einwandfreie Spülen des Wasserabscheiders über den zweiten Auslass möglich.

Gemäß einer Weiterbildung des Abscheiders nach der Erfindung kann das Wärmeleitelement zwischen dem ersten Auslass und dem zweiten Auslass angeordnet sein. Das Wärmeleitelement kann eine längliche Grundform aufweisen und sich zwischen dem ersten und zweiten Auslass erstrecken. Dies führt zu einem freigeschmolzenen Kanal in direktem Weg zwischen dem ersten und zweiten Auslass. Mit Vorteil ist das Wärmeelement einends nicht im Bereich des Einlasses angeordnet, um dort erwärmt zu werden. Bereits abgelagerte Wassertröpfchen könnten dann nämlich erneut in den Rezirkulationskreis gelangen, wobei der Fluidpfad im Gehäuse ein Teil des Rezirkulationskreises sein kann.

Gemäß einer denkbaren Weiterbildung des Abscheiders nach der Erfindung kann das Wärmeleitelement mehrteilig, vorzugsweise einstückig und/oder als Blech ausgebildet sein. Das Wärmeleitelement kann ein Blech oder aus einem Blech geformt sein. Die Einstückigkeit dient der verbesserten Wärmeleitung durch das Wärmeleitelement.

Gemäß einer Weiterbildung des Abscheiders nach der Erfindung kann das Wärmeleitelement zumindest einen Versteifungskanal aufweisen, welcher sich in Richtung des zweiten Auslasses erstreckt. Der Versteifungskanal erfüllt zwei Aufgaben zugleich. Er dient zum einen der Versteifung des Wärmeleitelements und zum anderen dem Kanalisieren von Wasser, welches entlang des Kanals in Richtung des zweiten Auslasses rinnen kann. Anstelle oder zusätzlich zumindest eines Kanals kann das Wärmeleitelement zumindest eine Rippe aufweisen. Zudem dienen Kanal und Rippe zusätzlich der Oberflächenvergrößerung des Wärmeleitelements, wodurch sich dieses schneller erwärmen lässt.

Gemäß einer Weiterbildung des Abscheiders nach der Erfindung kann das Wärmeleitelement an seiner dem zweiten Auslass zugewandten Endseite einen sich in Richtung des zweiten Auslasses verjüngenden Wärmekonzentrationsabschnitt aufweisen. Der Wärmekonzentrationsabschnitt verringert die Breite des Wärmeleitelements quer zur Wärmeleitrichtung und führt dazu, dass das Wärmeleitelement eine kleinere Oberfläche dort hat, wo es vom Eis abgekühlt werden kann. Die vom Wärmeleitelement geführte Wärme kann sich sodann auf einen gewünschten Punkt konzentrieren, um dort zu wirken.

Gemäß einer Weiterbildung des Abscheiders nach der Erfindung kann das Wärmeleitelement an seiner dem zweiten Auslass zugewandten Endseite einen Rohrabschnitt aufweisen, welcher vorzugsweise stoffeinheitlich mit dem Wärmeleitelement ausgebildet ist. Der Rohrabschnitt kann sich an den Wärmekonzentrationsabschnitt anschließen und mehrere Funktionen erfüllen. Zum einen kann er Wasser einem Flüssigkeitsauslassventil zuleiten, welches vom zweiten Auslass umfasst sein kann. Zudem kann im oder stirnseitig am Rohrabschnitt ein Teil eines Flüssigkeitsauslassventils anliegen, wodurch dieses ebenso von außen erwärmt wird.

Gemäß einer Weiterbildung des Abscheiders nach der Erfindung kann der zweite Auslass ein Flüssigkeitsauslassventil umfassen und/oder das Gehäuse einen dritten Auslass umfassen, welcher vorzugsweise ein Gasauslassventil umfasst. Die beiden Ventile sind derart am oder im Gehäuse, vorzugsweise in jeweils einer Kavität des Gehäuses, anordenbar, dass in Montagestellung das Flüssigkeitsauslassventil tiefer liegt, um angesammeltes Wasser schwerkraftunterstützt aus dem Gehäuse zu leiten, und das Gasauslassventil höher liegt, um überschüssiges Gas, wie beispielsweise Stickstoff, auszuleiten.

Gemäß einer Weiterbildung des Abscheiders nach der Erfindung kann sich die Gasleitung zwischen dem dritten Auslass und dem zweiten Auslass erstrecken, vorzugsweise mündet die Gasleitung in eine Kavität des zweiten Auslasses ein. In der Kavität kann das Flüssigkeitsauslassventil angeordnet sein. Diese Ausführung führt dazu, dass das warme Gas die Innenseite des Flüssigkeitsauslassventils anströmen und auftauen kann. Die Kavität kann vom Gehäuse ausgebildet sein. Die Gasleitung kann auch von einer oder mehreren Kavitäten angeschnitten sein und/oder über jeweils eine Öffnung mit zumindest einer der Kavitäten verbunden sein.

Gemäß einer denkbaren Weiterbildung des Abscheiders nach der Erfindung kann die Gasleitung eine Kavität für das Gasauslassventil mit einer Kavität für das Flüssigkeitsauslassventil verbinden. Zumindest eine der Kavitäten kann vom Gehäuse ausgebildet sein.

Gemäß einer denkbaren Weiterbildung des Abscheiders nach der Erfindung kann die Wandung der Gasleitung zum Innenraum des Gehäuses zumindest abschnittsweise ein Wärmeleitmittel aufweisen. Das Wärmeleitmittel kann beispielsweise eine Wandung mit hoher Wärmeleitfähigkeit und/oder ein gegenüber der restlichen Wandung der Gasleitung dünnere Wandungsstärke sein. Diese Wärmeleitmittel kann von dem Gas in der Gasleitung erwärmt werden, wobei diese Wärme sodann Eis schmelzen kann, welches an der Wandung anliegt. Dadurch kann auch Eis entlang der Gasleitung abgeschmolzen und ein weiterer Kanal in Richtung zweitem Auslass freigeschmolzen werden.

Gemäß einer denkbaren Weiterbildung des Abscheiders nach der Erfindung kann er eine Auslasssammelleitung umfassen, welche vorzugsweise vom Gehäuse ausgebildet ist. Die Auslasssammelleitung kann fluidisch mit den Ventilen verbunden sein und dient der Ausleitung von Abscheidungen wie Stickstoff und Wasser an die Umgebung des Gehäuses. Denkbar ist, dass die Auslasssammelleitung eine Verlängerung der Gasleitung ist, worüber dasjenige Gas ausgeleitet wird, welches stromaufwärts der Auslasssammelleitung die Kavität für das Flüssigkeitsauslassventil durchströmt hat. Denkbar ist alternativ oder zusätzlich, dass die Gasleitung parallel zur Auslasssammelleitung verläuft und vorzugsweise fluidisch mit ihr verbunden ist, weiter bevorzugt stromabwärts der Kavität für das Flüssigkeitsauslassventil. Im letzteren Fall kann die Auslasssammelleitung vom dritten Auslass über den zweiten Auslass zur Umgebung des Gehäuses führen.

Gemäß einer Weiterbildung des Abscheiders nach der Erfindung kann das Gehäuse aus einem metallischen, vorzugsweise aus einem nichtmetallischen Werkstoff ausgeführt sein, weiter bevorzugt aus einem Kunststoff. Das Gehäuse des Abscheiders kann aus einem isolierenden Material (z. B. Kunststoff) hergestellt werden, da dessen wärmeleitende Wirkung zum Auftauen des Eises nicht erforderlich ist. Dadurch wird der Wärmeverlust des Rezirkulationskreislaufes reduziert und die Zeit bis zur optimalen Betriebstemperatur verkürzt, denn die Erfindung nutzt in vorteilhafter Weise die Abwärme der Brennstoffzelle gezielt. Zudem sind dadurch wirtschaftlichere Herstellungsverfahren (z. B. Kunststoffspritzen) und Werkstoffe (Kunststoff anstatt Metalle) verwendbar.

Gemäß einer denkbaren Weiterbildung des Abscheiders nach der Erfindung kann er frei von aktiven Heizelementen sein, die der Erwärmung des Eises dienen. Auf bislang notwendige aktive Heizelemente, beispielsweise Widerstandsheizungen, kann daher verzichtet werden. Das führt zudem zur Steigerung der Effizienz der Brennstoffzelle, da bislang ein Teil der generierten elektrischen Energie für das Heizen und Auftauen verwendet wird.

Gemäß einer denkbaren Weiterbildung des Abscheiders nach der Erfindung kann er ein Wasserabscheider für ein Brennstoffzellensystem sein. Das Brennstoffzellensystem kann ein System eines Fahrzeugs sein. Gerade in diesem Anwendungskontext kommen die erfindungsgemäßen Stärken zum Tragen, da Brennstoffzellenfahrzeuge in kalten Umgebungen außerhalb ihres Betriebs nicht erwärmt werden müssen.

Erfindungsgemäß wird zudem eine Baugruppe vorgeschlagen, umfassend ein Flüssigkeitsauslassventil und ein Wärmeleitelement nach einem der vorangehenden Ansprüche. Das Flüssigkeitsauslassventil und das Wärmeleitelement können ausgebildet sein, um in einem Gehäuse eines Abscheiders angeordnet zu sein. Die bereits oben bezüglich des Abscheiders beschriebenen Vorteile ergeben sich analog auch für die Baugruppe, worauf hiermit verwiesen wird.

Erfindungsgemäß wird zudem die Verwendung eines Wärmeleitelements in einem Flüssigkeitsabscheider zum Transportieren der Wärme aus dem Bereich zumindest des Einlasses und/oder des ersten Auslasses zum zweiten Auslass und/oder einer Gasleitung welche fluidisch mit dem zweiten Auslass verbunden ist, um ein erwärmtes Gas dorthin zu leiten, vorgeschlagen. Die bereits oben bezüglich des Abscheiders beschriebenen Vorteile ergeben sich analog auch für die Verwendung, worauf hiermit verwiesen wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht eines erfindungsgemäßen Abscheiders;
- Fig. 2: eine Seitenansicht des Abscheiders nach Fig. 1;
- Fig. 3: eine Schnittansicht entlang der Linie III-III nach Fig. 1;
- Fig. 4: eine Seitenansicht des Abscheiders nach Fig. 1 mit teilweise ausgeblendetem Gehäuseteil;
- Fig. 5: eine Schnittansicht entlang der Linie V-V nach Fig. 1;
- Fig. 6: eine Schnittansicht entlang der Linie VI-VI nach Fig. 1 und
- Fig. 7: eine Unteransicht des Abscheiders nach Fig. 1 mit teilweise ausgeblendetem Gehäuseteil.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

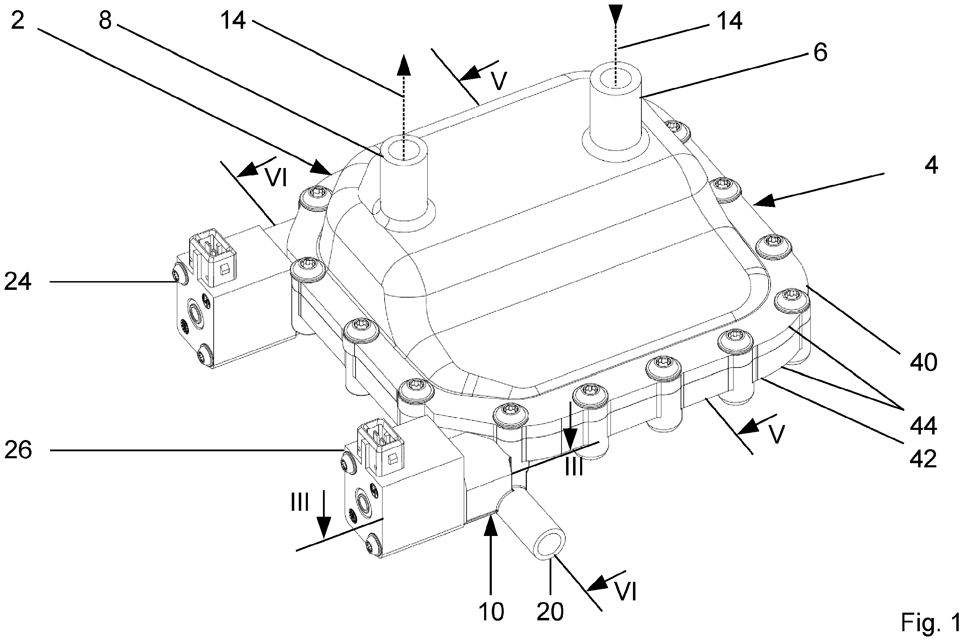

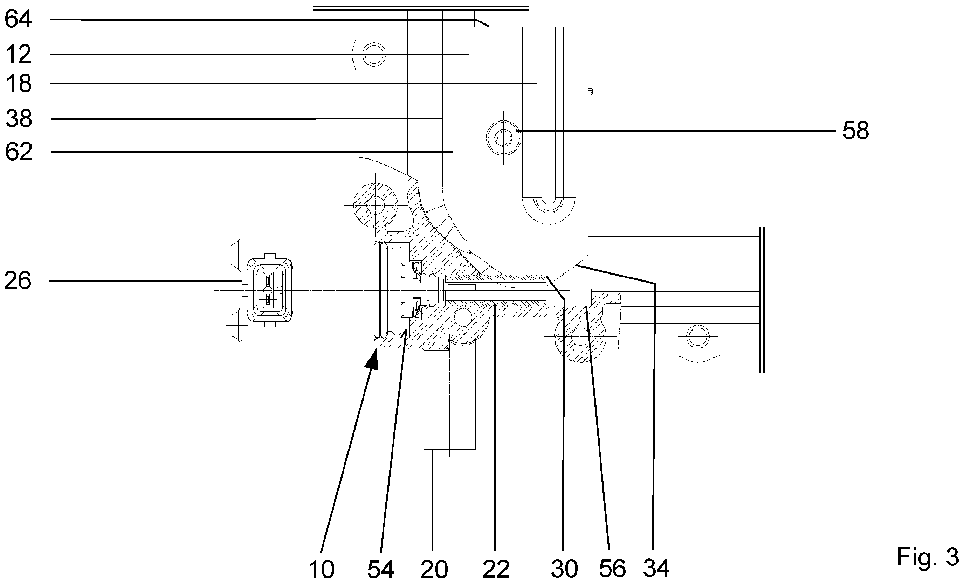

Die Figuren 1 bis 7 zeigen unterschiedliche Ansichten eines Ausführungsbeispiels eines Abscheiders 2. Der Abscheider 2 wird im Kontext eines Brennstoffzellensystems beschrieben. Mittel einer Prallabscheidung sind aus Gründen der Übersichtlichkeit nicht abgebildet.

Der Abscheider 2 umfasst ein Gehäuse 4 aus Kunststoff, welches zweiteilig aus einem ersten Gehäuseteil 40 und einem zweiten Gehäuseteil 42 ausgeführt ist. Die Gehäuseteile 40, 42 umfassen jeweils einen umlaufenden Flansch 44, über welche beide miteinander verschraubt sind. Im zweiten Gehäuseteil 42 ist im Flansch 44 eine umlaufende Nut 46 ausgebildet, die einen Dichtungsring 48 aufnimmt, welcher am Flansch 44 des ersten Gehäuseteils 40 anliegt und über welchen der Gehäuseinnenraum 50 gegenüber einer Umgebung abgedichtet ist.

Das erste Gehäuseteil 40 weist einen Einlass 6 auf, welcher ausgebildet ist zum Einleiten eines Fluidstroms 14 in das Gehäuse 4. Der Fluidstrom 14 kann Teil eines Rezirkulationskreises des Brennstoffzellensystems sein. Das erste Gehäuseteil 40 weist zudem einen ersten Auslass 8 auf, der ausgebildet ist zum Ausleiten des Fluidstroms 14 aus dem Gehäuse 4. Eine erste Auslassöffnung 28 verbindet den Gehäuseinnenraum 50 mit dem ersten Auslass 8. Der Einlass 6 und der Auslass 8 sind in der gleichen Seitenwand des ersten Gehäuseteils 40 ausgebildet und parallel zueinander ausgerichtet. Das Gehäuse 4 weist im zweiten Gehäuseteil 42 einen zweiten Auslass 10 auf, welcher ausgebildet ist zum Ausleiten von aus dem Fluidstrom 14 abgeschiedenen Abscheidungen aus dem Gehäuse 4. Der zweite Auslass 10 umfasst ein Flüssigkeitsauslassventil 26, welches ein Auslassen von Flüssigkeit aus dem Gehäuseinnenraum 50 zulässt. Eine zweite Auslassöffnung 30 verbindet den Gehäuseinnenraum 50 mit dem zweiten Auslass 10. Das Gehäuse 4 weist im zweiten Gehäuseteil 42 zudem einen dritten Auslass 16 auf, welcher ausgebildet ist zum Ausleiten von aus dem Fluidstrom 14 abgeschiedenen Gasen aus dem Gehäuse 4. Der dritte Auslass 16 umfasst ein Gasauslassventil 24, welches ein Auslassen von Gas aus dem Gehäuseinnenraum 50 ermöglicht. Eine dritte Auslassöffnung 32 verbindet den Gehäuseinnenraum 50 mit dem dritten Auslass 16. In Montagestellung verlaufen Einlass 6 und Auslass 8 in etwa horizontal und das Gasauslassventil 24 ist oberhalb des Flüssigkeitsauslassventils 26 angeordnet.

Zwischen dem Gasauslassventil 24 und dem Flüssigkeitsauslassventils 26 erstreckt sich eine Gasleitung 38. Die Gasleitung 38 ist einstückig mit dem zweiten Gehäuseteil 42 ausgeführt und verbindet zumindest eine vom zweiten Gehäuseteil 42 ausgebildete Gasauslassventilkavität 53 mit zumindest einer vom zweiten Gehäuseteil 42 ausgebildeten Flüssigkeitsauslassventilkavität 54. In den Kavitäten sind die jeweiligen Ventile 24, 26 aufgenommen. In Verlängerung der Gasleitung 38 ist eine Auslasssammelleitung 20 ausgebildet. Von dem Gasauslassventil 24 ausgelassenes Gas durchströmt die Gasleitung 38 in Richtung Flüssigkeitsauslassventilkavität 54 und dort hinein. Danach strömt es in die Auslasssammelleitung 20. Von dem Flüssigkeitsauslassventil 26 ausgelassene Flüssigkeit durchströmt zunächst die Flüssigkeitsauslassventilkavität 54 und dann die Auslasssammelleitung 20 oder strömt gleich ohne Passage der Flüssigkeitsauslassventilkavität 54 in die Auslasssammelleitung 20. Über die Auslasssammelleitung 20 werden die Abscheidungen an die Umgebung ausgeleitet.

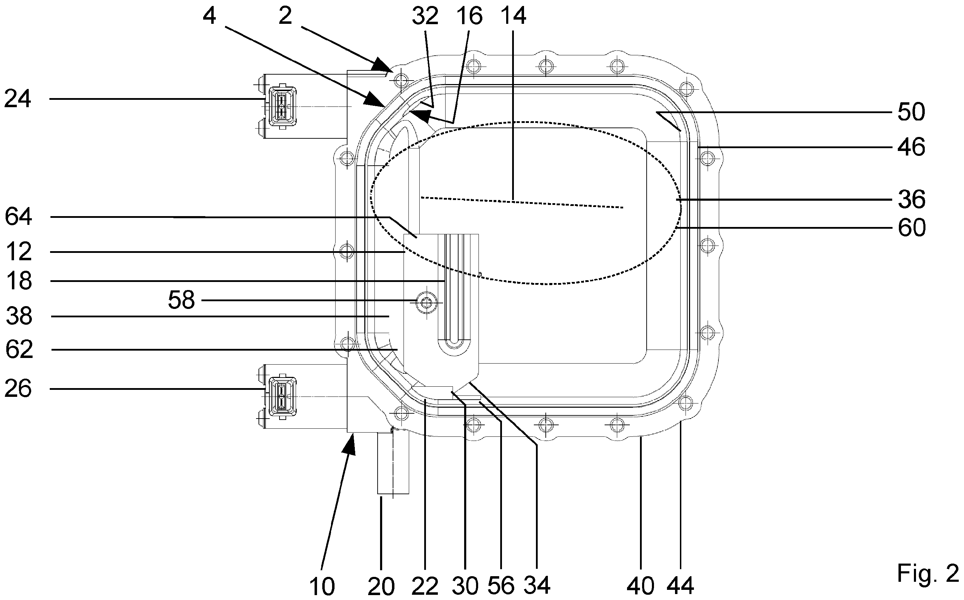

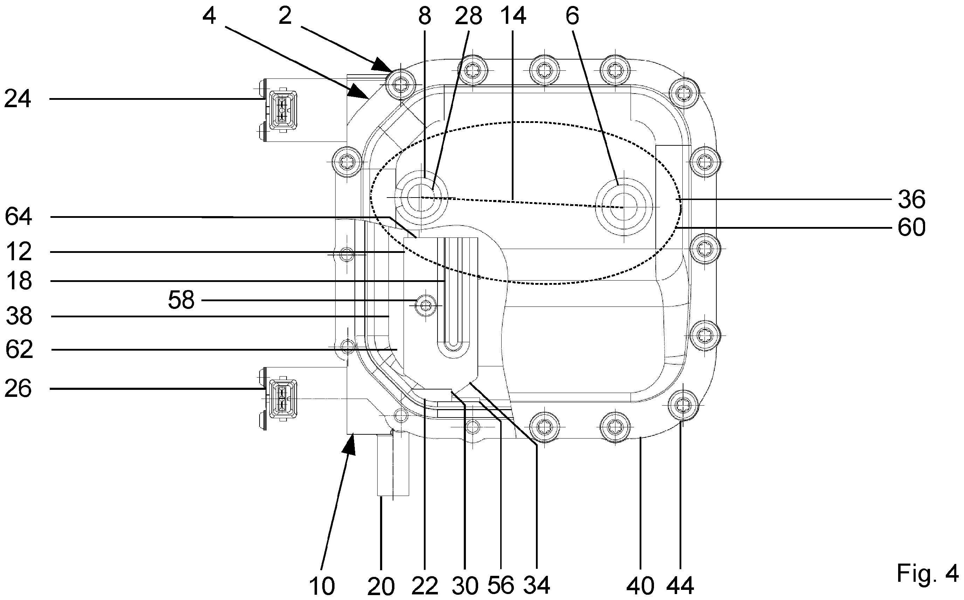

Die Figuren 2 und 4 zeigen, dass innerhalb des Gehäuseinnenraums 50 ein zum Gehäuse 4 separates und einstückiges Wärmeleitelement 12 angeordnet ist, welches aus einem länglichen Blech gebildet ist. Das Wärmeleitelement 12 erstreckt sich zwischen dem ersten Auslass 8 und dem zweiten Auslass 10. Es umfasst in seiner Längsrichtung einen Versteifungskanal 18, der sich in Richtung des zweiten Auslasses 10 erstreckt. An seiner dem zweiten Auslass 10 zugewandten Seite umfasst das Wärmeleitelement 12 einen Wärmekonzentrationsabschnitt 34. Dieser ist als konischer oder kegelstumpfartiger Abschnitt ausgeführt und verringert die Breite des Wärmeleitelements 12 in Richtung des zweiten Auslasses 10. An seiner schmalsten Stelle schließt sich an den Wärmekonzentrationsabschnitt 34 ein Rohrabschnitt 22 an, welcher stoffeinheitlich mit dem Wärmeleitelement 12 ausgebildet ist. Der Rohrabschnitt 22 kann die zweite Auslassöffnung 30 ausbilden und Wasser zum Flüssigkeitsauslassventil 26 leiten. Der halbe Durchmesser des Rohrabschnitts 22 ist in einer Ausnehmung 56 des zweiten Gehäuseteils 42 aufgenommen, wodurch das Wärmeleitelement 12 fixiert ist. Die Ausnehmung 56 definiert in Montagestellung die tiefste Stelle im Gehäuseinnenraum 50. Eine weitere Fixierung wird durch eine Verschraubung 58 mit dem zweiten Gehäuseteil 42 realisiert, wobei die Verschraubung 58 vorzugsweise derart thermisch isoliert ist, dass sie das Wärmeleitelement 12 thermisch gegenüber dem zweiten Gehäuseteil 42 trennt und so einen Energieverlust im Wärmeleitelement 12 verhindert.

Figur 4 zeigt, dass der Fluidpfad 14 durch den Einlass 6 in das Gehäuse 4 führt. Von dort aus führt er zum Auslass 8 und sodann erneut aus dem Gehäuse 4 heraus. Der Verlauf des Fluidpfads 14 im Gehäuse 4 ist zwar linear dargestellt, jedoch grundsätzlich von dem verwendeten System der Abscheidung abhängig und kann dann andere Verläufe im Gehäuse 4 annehmen, welche jedoch die Erfindung und deren technische Wirkung nicht beeinflussen. Aus Gründen der Übersichtlichkeit ist der gehäuseinterne Fluidpfad 14 linear dargestellt. Der Fluidpfad 14 bildet das Zentrum eines sich darum aufspannenden Fluidpfadbereichs 36, der aus Gründen der Darstellbarkeit hier Außengrenzen 60 eines räumlichen Bereichs aufweist, obgleich die Übergänge fließend sein können. Der Fluidpfadbereich 36 ist der Bereich um den Fluidpfad 14 herum, in welchem eine nennenswerte Erwärmung des Wärmeleitelements 12 oder dessen Erwärmungsbereich 64 an dessen einem Endbereich mittels Konvektion erfolgen kann. Vorzugsweise sollte der Erwärmungsbereich 64 möglichst nahe am Fluidpfad 14 oder dem Hauptstrom liegen, um möglichst viel Wärme aufzunehmen, jedoch sollte er weit genug davon entfernt liegen, um keine übermäßig störenden Verwirbelungen zu erzeugen. In dem von den Außengrenzen 60 begrenzten Bereich bewegt sich hauptsächlich entlang des Fluidpfads 14 ein warmes Rezirkulationsgasgemisch. Es ist ersichtlich, dass das Wärmeleitelement 12 einends im Fluidpfadbereich 36 angeordnet ist.

Das Auftauen des eingefrorenen und zugefrorenen Flüssigkeitsauslassventils 26 kann nun derart erfolgen, dass ein warmes Rezirkulationsgasgemisch entlang des Fluidpfads 14 in und durch das Gehäuse 4 geführt wird. Dadurch wird zum einen das Wärmeleitelement 12 an seinem im Fluidpfadbereich 36 liegenden Endbereich oder Erwärmungsbereich 64 erwärmt und schmilzt entlang seiner Erstreckung durch das Gehäuse 4 hindurch einen Kanal im Eis frei, der zum Flüssigkeitsauslassventils 26 führt. Die Wärme aus dem Rezirkulationsgasgemisch wird durch das Wärmeleitelement 12 somit in Richtung des Flüssigkeitsauslassventils 26 befördert. Dadurch wird zum anderen heißes Gas oder heißer Stickstoff über das Gasauslassventil 24 aus dem Gehäuseinnenraum 50 in die Gasleitung 38 ausgelassen und in dem heißen Zustand zur Flüssigkeitsauslassventilkavität 54 geführt. Diese Ausführung führt dazu, dass das heiße Gas die Innenseite des Flüssigkeitsauslassventils 26 anströmen und auftauen kann. Das Wärmeleitelement 12 hingegen strömt die äußere Seite des Flüssigkeitsauslassventils 26 erwärmend an und befreit dort vom Eis. Die Wandung 62 der Gasleitung 38 zum Innenraum 50 des Gehäuses 4 ist so dünn ausgebildet, dass diese vom heißen Gas innerhalb der Gasleitung 38 erwärmt wird und einen weiteren Kanal ins Eis schmilzt.

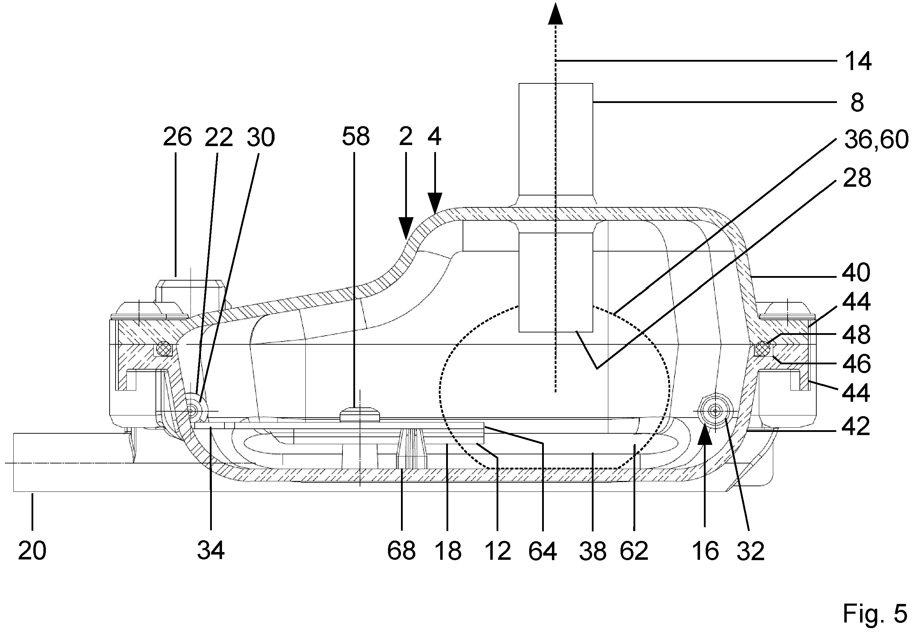

In Figur 5 ist eine Schnittansicht entlang der Linie V-V nach Fig. 1 zu sehen, die durch das Gehäuse 4 verläuft. Insbesondere ist dort eine räumliche Anordnung des Wärmeleitelements 12 im Gehäuse 4 und die Anordnung zur zweiten Auslassöffnung 30 abgebildet. Das Gehäuseteil 42 weist ein Anlageelement 68 auf, welches von der Gehäusewand abragt. Das Anlageelement 68 kann eine Zylinderform aufweisen, die sich in Richtung Wärmeleitelement 12 erstrecken kann, oder einen Armabschnitt aufweisen, der sich zumindest abschnittsweise parallel zum Wärmeleitelement 12 erstreckt und/oder das Wärmeleitelement 12 in der Bildebene untergreift. Das Anlageelement 68 liegt gegen das Wärmeleitelement 12 über eine Kontaktseite an. Die Kontaktseite des Anlageelements 68 kann ein flexibles Element tragen, beispielsweise ein Elastomer. Sie kann jedoch auch ohne flexibles Element ausgeführt sein. Das Anlageelement 68 kann derart ausgestaltet und/oder angeordnet sein und/oder das Wärmeleitblech 12 kann derart ausgestaltet und/oder angeordnet sein, dass das Anlageelement 68 das Wärmeleitblech 12 vorspannt. Das Anlageelement 68 dient als Vorspannelement, damit das Wärmeleitblech 12 nicht schwingen kann.

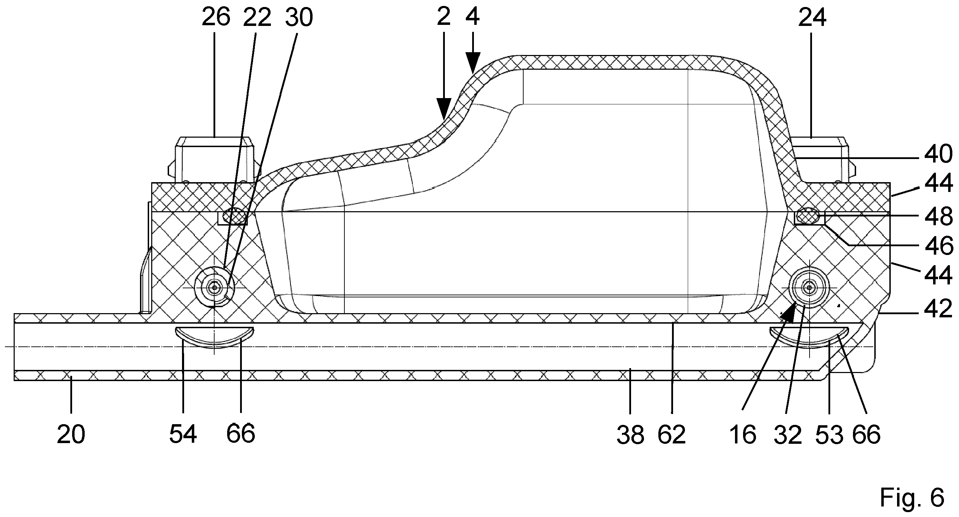

Figur 6 zeigt eine Schnittansicht entlang der Linie VI-VI nach Fig. 1, wobei diese Schnittansicht parallel zur Schnittansicht entlang der Linie V-V nach Fig. 1 verläuft. In Figur 6 ist jedoch der Abscheider 2 entlang der Auslasssammelleitung 20 und Gasleitung 38 geschnitten. Es ist insbesondere erkennbar, dass die Gasleitung 38 in die Auslasssammelleitung 20 einmündet. Beide können eine gemeinsame Leitung ausbildet. Die Gasleitung 38 weist umfangsseitig zwei Öffnungen 66 auf, welche einen halbreisförmigen Querschnitt haben können. Jede Öffnung 66 ist einer Kavität 53, 54 zugeordnet. Über die in der Bildebene rechte Öffnung 66 ist die Gasauslassventilkavität 53 fluidisch mit der Gasleitung 38 verbunden und über die in der Bildebene linke Öffnung 66 ist die Flüssigkeitsauslassventilkavität 54 fluidisch mit der Gasleitung 38 verbunden. Die Öffnungen 66 können als Anschnitte ausgebildet sein.

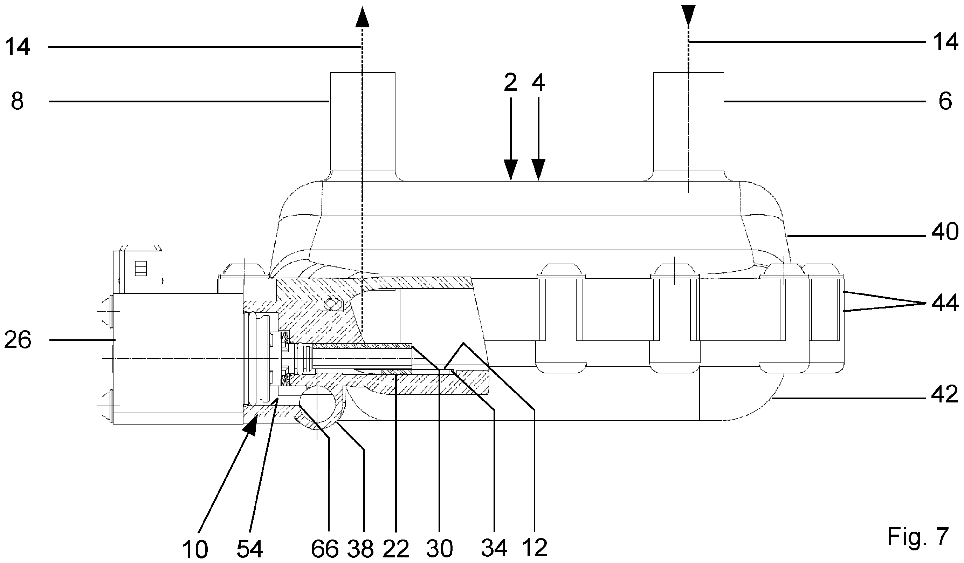

Figur 7 zeigt nun eine Unteransicht des Abscheiders nach Fig. 1 mit teilweise ausgeblendetem Gehäuse 4 im Bereich des Flüssigkeitsauslassventils 26. Das Flüssigkeitsauslassventil 26 ist teilweise in das Gehäuseteil 42 eingesetzt und in der Flüssigkeitsauslassventilkavität 54 aufgenommen. Stirnseitig des Flüssigkeitsauslassventils 26 ragt der Rohrabschnitt 22 in das Gehäuse 4 hinein. Erkennbar ist zudem, dass die Flüssigkeitsauslassventilkavität 54 über die Öffnung 66 mit der Gasleitung 38 verbunden ist. In dieser Ansicht wird auch der Anschnitt der Gasleitung 38 deutlich, der zur Öffnung 66 führt. Dieser kann beispielsweise mittels Bohrung ausgeführt sein. Obgleich nicht in Figur 7 gezeigt, gelten diese Merkmale analog auch für das Gasauslassventil 24 und dessen Verbindung zur Gasleitung 38.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

### Bezugszeichenliste

- 2: Abscheider
- 4: Gehäuse
- 6: Einlass
- 8: erster Auslass
- 10: zweiter Auslass
- 12: Wärmeleitelement
- 14: Fluidstrom
- 16: dritter Auslass
- 18: Versteifungskanal
- 20: Auslasssammelleitung
- 22: Rohrabschnitt
- 24: Gasauslassventil
- 26: Flüssigkeitsauslassventil
- 28: erste Auslassöffnung
- 30: zweite Auslassöffnung
- 32: dritte Auslassöffnung
- 34: Wärmekonzentrationsabschnitt
- 36: Fluidpfadbereich
- 38: Gasleitung
- 40: Gehäuseteil
- 42: Gehäuseteil
- 44: Flansch
- 46: Nut
- 48: Dichtungsring
- 50: Gehäuseinnenraum
- 53: Gasauslassventilkavität
- 54: Flüssigkeitsauslassventilkavität
- 56: Ausnehmung
- 58: Verschraubung
- 60: Außengrenze
- 62: Wandung
- 64: Erwärmungsbereich
- 66: Öffnung
- 68: Anlageelement

## Patentansprüche

1. Abscheider, insbesondere Wasserabscheider, umfassend
ein Gehäuse (4) mit einem Einlass (6), ausgebildet zum Einleiten eines Fluidstroms (14) in das Gehäuse (4), einem ersten Auslass (8), ausgebildet zum Ausleiten des Fluidstroms (14) aus dem Gehäuse (4), und einem zweiten Auslass (10), ausgebildet zum Ausleiten von aus dem Fluidstrom (14) abgeschiedenen Abscheidungen aus dem Gehäuse (4), **dadurch gekennzeichnet, dass** innerhalb des Gehäuses (4) ein Wärmeleitelement (12) derart angeordnet ist, dass es einends im oder benachbart zum Fluidstrom (14) angeordnet und anderenends am zweiten Auslass (10) angeordnet ist und/oder, dass eine Gasleitung (38) im oder am Gehäuse (4) vorhanden ist, welche fluidisch mit dem zweiten Auslass (10) verbunden ist, um ein erwärmtes Gas dorthin zu leiten.

2. Abscheider nach Anspruch 1, **dadurch gekennzeichnet, dass** das Wärmeleitelement (12) zwischen dem ersten Auslass (8) und dem zweiten Auslass (10) angeordnet ist.

3. Abscheider nach einem der vorangehenden Ansprüche, **dadurch gekennzeichnet, dass** das Wärmeleitelement (12) zumindest einen Versteifungskanal (18) aufweist, welcher sich in Richtung des zweiten Auslasses (10) erstreckt.

4. Abscheider nach einem der vorangehenden Ansprüche, **dadurch gekennzeichnet, dass** das Wärmeleitelement (12) an seiner dem zweiten Auslass (10) zugewandten Endseite einen sich in Richtung des zweiten Auslasses (10) verjüngenden Wärmekonzentrationsabschnitt (34) aufweist.

5. Abscheider nach einem der vorangehenden Ansprüche, **dadurch gekennzeichnet, dass** das Wärmeleitelement (12) an seiner dem zweiten Auslass (10) zugewandten Endseite einen Rohrabschnitt (22) aufweist, welcher vorzugsweise stoffeinheitlich mit dem Wärmeleitelement (12) ausgebildet ist.

6. Abscheider nach einem der vorangehenden Ansprüche, **dadurch gekennzeichnet, dass** der zweite Auslass (10) ein Flüssigkeitsauslassventil (26) umfasst und/oder das Gehäuse (4) einen dritten Auslass (16) umfasst, welcher vorzugsweise ein Gasauslassventil (24) umfasst.

7. Abscheider nach Anspruch 6, **dadurch gekennzeichnet, dass** sich die Gasleitung (38) zwischen dem dritten Auslass (16) und dem zweiten Auslass (10) erstreckt, vorzugsweise mündet die Gasleitung (38) in eine Kavität (54) des zweiten Auslasses (10) ein.

8. Abscheider nach einem der vorangehenden Ansprüche, **dadurch gekennzeichnet, dass** das Gehäuse (4) aus einem metallischen, vorzugsweise aus einem nichtmetallischen Werkstoff ausgeführt ist, weiter bevorzugt aus einem Kunststoff.

9. Baugruppe, umfassend ein Flüssigkeitsauslassventil (26) und ein Wärmeleitelement (12) nach einem der vorangehenden Ansprüche.

10. Verwendung eines Wärmeleitelements (12) in einem Flüssigkeitsabscheider (2) zum Transportieren der Wärme aus dem Bereich zumindest des Einlasses (6) und/oder des ersten Auslasses (8) zum zweiten Auslass (10) und/oder einer Gasleitung (38) welche fluidisch mit dem zweiten Auslass (10) verbunden ist, um ein erwärmtes Gas dorthin zu leiten.
